(19) Europäisches Patentamt
European Patent Office
Office européen des brevets

(11) EP 0 993 495 B1

(12) **EUROPÄISCHE PATENTSCHRIFT**

(45) Veröffentlichungstag und Bekanntmachung des Hinweises auf die Patenterteilung:
**09.04.2003 Patentblatt 2003/15**

(21) Anmeldenummer: **98937502.7**

(22) Anmeldetag: **18.06.1998**

(51) Int Cl.[7]: **C09D 17/00**, C09D 11/00, B41M 7/00

(86) Internationale Anmeldenummer:
**PCT/EP98/03706**

(87) Internationale Veröffentlichungsnummer:
**WO 99/001517 (14.01.1999 Gazette 1999/02)**

(54) **ALS INK-JET-TINTEN GEEIGNETE PIGMENTZUBEREITUNGEN MIT STRAHLUNGSHÄRTBAREM BINDEMITTEL**

PIGMENT PREPARATIONS WITH RADIATION CURABLE BINDER SUITABLE FOR INK JET PRINTING METHOD

PREPARATIONS DE PIGMENT CONVENANT AU PROCEDE D'IMPRESSION PAR JET D'ENCRE ET CONTENANT UN LIANT DURCISSABLE PAR RAYONNEMENT

(84) Benannte Vertragsstaaten:
**CH DE FR GB IT LI**

(30) Priorität: **30.06.1997 DE 19727767**

(43) Veröffentlichungstag der Anmeldung:
**19.04.2000 Patentblatt 2000/16**

(73) Patentinhaber: **BASF AKTIENGESELLSCHAFT**
**67056 Ludwigshafen (DE)**

(72) Erfinder:
- **HERRMANN, Manfred**
  **D-67061 Ludwigshafen (DE)**
- **MOTZKUS, Gert**
  **D-67063 Ludwigshafen (DE)**
- **REICH, Wolfgang**
  **D-67133 Maxdorf (DE)**
- **SENS, Rüdiger**
  **D-67069 Ludwigshafen (DE)**
- **SIEGEL, Bernd**
  **D-67166 Otterstadt (DE)**
- **SIEMENSMEYER, Karl**
  **D-67227 Frankenthal (DE)**

(56) Entgegenhaltungen:
**EP-A- 0 658 607**
**DE-A- 4 413 242**
**GB-A- 1 551 829**
**US-A- 5 538 549**

- **DATABASE WPI Section Ch, Week 9617 Derwent Publications Ltd., London, GB; Class A12, AN 96-167368 XP002082415 & JP 08 048922 A (TEIKOKU INK SEIZO KK) , 20. Februar 1996 in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Ink-Jet-Tinten, welche

A) mindestens ein feinteiliges organisches oder anorganisches Pigment,

B) ein Dispergiermittel auf der Basis von Arylsulfonsäure-Formaldehyd-Kondensationsprodukten (B1) enthaltend

50 bis 97 Gew.-% Arylsulfonsäure-Formaldehyd-Kondensationsprodukte und

3 bis 50 Gew.-% aromatische oder langkettige aliphatische Carbonsäuren, deren Salze oder deren Anhydride oder Mischungen davon

oder von oxalkylierten Phenolen der Formel I oder II

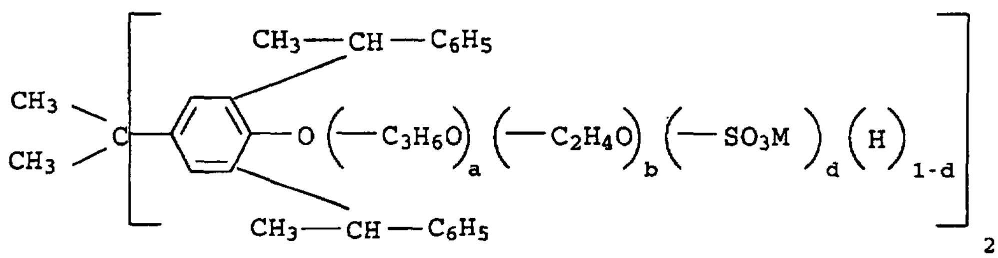

(I)

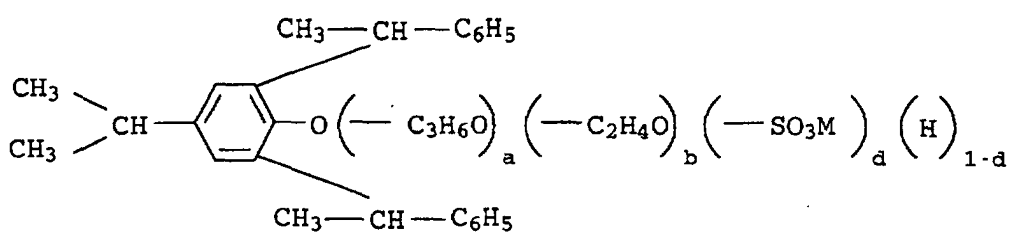

(II)

in denen

M Alkalimetall, beispielsweise Na oder K,

a 0 bis im Mittel 125,

b im Mittel 37 bis 250, wobei im Falle b>37 das Verhältnis b:a mindestens 1:1 ist,

d 0 oder 1 bedeuten,

oder deren Gemische,

C) ein strahlungshärtbares Bindemittel

D) gewünschtenfalls einen Photoinitiator und

E) Wasser

als wesentliche Bestandteile enthalten.

Weiterhin betrifft die Erfindung die Verwendung dieser Pigmentzubereitungen als Tinten im Ink-Jet-Verfahren sowie ein Verfahren zum Bedrucken von flächigen oder dreidimensional gestalteten Substraten im Ink-Jet-Verfahren, bei welchem diese Pigmentzubereitungen eingesetzt werden.

An die Tinten, die beim Ink-Jet-Verfahren (Tintenstrahldruckverfahren) eingesetzt werden, werden eine Reihe von Anforderungen gestellt: Sie müssen zum Drucken geeignete Viskosität und Oberflächenspannung aufweisen, sie müssen lagerstabil sein, d.h., sie sollen nicht koagulieren und das dispergierte, nicht gelöste, Farbmittel soll sich nicht absetzen, sie dürfen nicht zu einer Verstopfung der Druckerdüse führen, was ebenfalls insbesondere bei pigmenthaltigen, also dispergierte Farbmittelteilchen enthaltenden, Tinten problematisch sein kann, und schließlich sollen sie umweltverträglich sein, d.h. weitgehend auf Wasser als flüssiger Phase basieren und organische Lösungsmittel allenfalls in geringen Mengen enthalten. Außerdem müssen auch die erhaltenen Drucke den koloristischen Anforderungen genügen, d.h. Brillanz und Farbtiefe zeigen, und gute Echtheiten, z.B. Reibechtheit, Lichtechtheit und Wasserechtheit bzw. Waschechtheit bei Druck auf textilem Substrat, aufweisen.

Aus der EP-A-658 607 und der JP-A-48922/1996 sind wäßrige UVhärtbare Tinten bekannt, welche sich nicht zuletzt aufgrund des Dispergiermittels von den erfindungsgemäßen Pigmentzubereitungen unterscheiden.

Aus EP-A 0 658 607 sind wässrige strahlungshärtbare Ink-Jet-Tinten bekannt, die ein Pigment und weiterhin ein wasserlösliches Harz auf Basis von Styrol-Acrylsäure-Copolymeren oder Vinylnaphthalin-Acrylsäure-Copolymeren als Dispergiermittel enthalten.

GB-A 1 155 892 offenbart die Verwendung von β-Naphthalinsulfonsäure/Formaldehyd -Kondensationsprodukten als Dispergiermittel in wässrigen Pigmentzubereitungen.

Aufgabe der vorliegenden Erfindung war es, neue Pigmentzubereitungen bereitzustellen, welche vorteilhafte Anwendung im Ink-Jet-Verfahren finden können.

Demgemäß wurden die eingangs definierten Pigmentzubereitungen gefunden.

Die erfindungsgemäßen Pigmentzubereitungen enthalten ein feinteiliges, organisches oder anorganisches Pigment. Als organisches Pigment sind hierbei auch Küpenfarbstoffe zu verstehen. Selbstverständlich können die erfindungsgemäßen Pigmentzubereitungen auch Mischungen verschiedener organischer oder verschiedener anorganischer Pigmente oder von organischen und anorganischen Pigmenten enthalten.

Beispiele für geeignete Pigmente (A) sind dabei:

Organische Pigmente:

- Monoazopigmente: C.I. Pigment Brown 25;
  C.I. Pigment Orange 5, 13, 36 und 67;
  C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 251, 112, 146, 170, 184, 210 und 245;
  C.I. Pigment Yellow 1, 3, 73, 74, 65, 97, 151 und 183;

- Disazopigmente: C.I. Pigment Orange 16, 34 und 44;
  C.I. Pigment Red 144, 166, 214 und 242;
  C.I. Pigment Yellow 12, 13, 14, 16, 17, 81, 83, 106, 113, 126, 127, 155, 174, 176 und 188;

- Anthanthronpigmente: C.I. Pigment Red 168
  (C.I. Vat Orange 3);

- Anthrachinonpigmente: C.I. Pigment Yellow 147 und 177;
  C.I. Pigment Violet 31;

- Anthrapyrimidinpigmente: C.I. Pigment Yellow 108
  (C.I. Vat Yellow 20) ;

- Chinacridonpigmente: C.I. Pigment Red 122, 202 und 206;
  C.I. Pigment Violet 19;

- Chinophthalonpigmente: C.I. Pigment Yellow 138;

- Dioxazinpigmente: C.I. Pigment Violet 23 und 37;

- Flavanthronpigmente: C.I. Pigment Yellow 24

(C.I. Vat Yellow 1);

- Indanthronpigmente: C.I. Pigment Blue 60 (C.I. Vat Blue 4) und 64 (C.I. Vat Blue 6);

- Isoindolinpigmente: C.I. Pigment Orange 69; C.I. Pigment Red 260; C.I. Pigment Yellow 139 und 185;

- Isoindolinonpigmente: C.I. Pigment Orange 61; C.I. Pigment Red 257 und 260; C.I. Pigment Yellow 109, 110, 173 und 185;

- Isoviolanthronpigmente: C.I. Pigment Violet 31 (C.I. Vat Violet 1);

- Metallkomplexpigmente: C.I. Pigment Yellow 117, 150 und 153; C.I. Pigment Green 8;

- Perinonpigmente: C.I. Pigment Orange 43 (C.I. Vat Orange 7); C.I. Pigment Red 194 (C.I. Vat Red 15) ;

- Perylenpigmente: C.I. Pigment Black 31 und 32; C.I. Pigment Red 123, 149, 178, 179 (C.I. Vat Red 23), 190 (C.I. Vat Red 29) und 224; C.I. Pigment Violet 29;

- Phthalocyaninpigmente: C.I. Pigment Blue 15, 15:1, 15:2, 15:3, 15:4, 15:6 und 16; C.I. Pigment Green 7 und 36;

- Pyranthronpigmente: C.I. Pigment Orange 51; C.I. Pigment Red 216 (C.I. Vat Orange 4);

- Thioindigopigmente: C.I. Pigment Red 88 und 181 (C.I. Vat Red 1); C.I. Pigment Violet 38 (C.I. Vat Violet 3);

- Triarylcarboniumpigmente: C.I. Pigment Blue 1, 61 und 62; C.I. Pigment Green 1; C.I. Pigment Red 81, 81:1 und 169; C.I. Pigment Violet 1, 2, 3 und 27;

- C.I. Pigment Black 1 (Anilinschwarz);

- C.I. Pigment Yellow 101 (Aldazingelb) ;

- C.I. Pigment Brown 22;

Küpenfarbstoffe (außer den bereits oben genannten):

- C.I. Vat Yellow 2, 3, 4, 5, 9, 10, 12, 22, 26, 33, 37, 46, 48, 49 und 50;

- C.I. Vat Orange 1, 2, 5, 9, 11, 13, 15, 19, 26, 29, 30 und 31;

- C.I. Vat Red 2, 10, 12, 13, 14, 16, 19, 21, 31, 32, 37, 41, 51, 52 und 61;
- C.I. Vat Violet 2, 9, 13, 14, 15, 17 und 21;
- C.I. Vat Blue 1 (C.I. Pigment Blue 66), 3, 5, 10. 12, 13, 14, 16, 17, 18, 19, 20, 22, 25, 26, 29, 30, 31, 35, 41, 42, 43, 64, 65, 66, 72 und 74;
- C.I. Vat Green 1, 2, 3, 5, 7, 8, 9, 13, 14, 17, 26, 29, 30, 31, 32, 33, 40, 42, 43, 44 und 49;
- C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84;
- C.I. Vat Black 1, 2, 7, 8, 9, 13, 14, 16, 19, 20, 22, 25, 27, 28, 29, 30, 31, 32, 34, 36, 56, 57, 58, 63, 64 und 65;

anorganische Pigmente:

- Weißpigmente: Titandioxid (C.I. Pigment White 6), Zinkweiß, Farbenzinkoxid; Zinksulfid, Lithopone; Bleiweiß;
- Schwarzpigmente: Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente: Chromoxid, Chromoxidhydratgrün; Chromgrün (C.I. Pigment Green 48); Cobaltgrün (C.I. Pigment Green 50); Ultramaringrün;
  Kobaltblau (C.I. Pigment Blue 28 und 36); Ultramarinblau; Eisenblau (C.I. Pigment Blue 27); Manganblau; Ultramarinviolett; Kobalt- und Manganviolett;
  Eisenoxidrot (C.I. Pigment Red 101); Cadmiumsulfoselenid (C.I. Pigment Red 108); Molybdatrot (C.I. Pigment Red 104); Ultramarinrot;
  Eisenoxidbraun, Mischbraun, Spinell- und Korundphasen (C.I. Pigment Brown 24, 29 und 31), Chromorange;
  Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);
- Interferenzpigmente: Metalleffektpigmente auf der Basis beschichteter Metallplättchen; Perlglanzpigmente auf der Basis metalloxidbeschichteter Glimmerplättchen; Flüssigkristallpigmente.

Als bevorzugte Pigmente sind dabei Monoazopigmente (insbesondere verlackte BONS-Pigmente, Naphthol AS-Pigmente), Disazopigmente (insbesondere Diarylgelbpigmente, Bisacetessigsäureacetanilidpigmente, Disazopyrazolonpigmente), Chinophthalonpigmente, Phthalocyaninpigmente, Triarylcarboniumpigmente (Alkaliblaupigmente, Farbstoffsalze mit komplexen Anionen) und Ruß zu nennen.

Das enthaltene Pigment sollte möglichst feinteilig sein. Bevorzugt haben 95 %, besonders bevorzugt 99 %, der Pigmentteilchen eine Teilchengröße ≤ 1 µm.

Die Pigmentteilchen können unterschiedliche Form aufweisen und dementsprechend das Fließverhalten der Pigmentzubereitungen beeinflussen. Nichtisometrische Pigmentteilchen führen in der Regel zu höheren Fließviskositäten und zeigen oft kein Newtonsches Fließverhalten, während isometrische Pigmentteilchen im allgemeinen bei gleicher Pigmentkonzentration niedriger viskose Zubereitungen ergeben und meist Newtonsches Fließerhalten zeigen.

Die erfindungsgemäßen Pigmentzubereitungen enthalten in der Regel 0,1 bis 20 Gew.-%, vorzugsweise 0,2 bis 10 Gew.-%, Pigment (A).

Als Komponente (B) enthalten die erfindungsgemäßen Pigmentzubereitungen ein wasserlösliches Dispergiermittel auf der Basis eines oder mehrerer Arylsulfonsäure-Formaldehyd-Kondensationsprodukte (B1) oder eines oder mehrerer wasserlöslicher oxalkylierter Phenole (B2).

Als Dispergiermittel (B1) sind Kondensationsprodukte mit einem Sulfonsäuregruppengehalt von maximal 40 Gew.-% bevorzugt.

Die Kondensationsprodukte (B1) sind durch Sulfonieren aromatischer Verbindungen wie Naphthalin selbst oder Naphthalin enthaltender Gemische und anschließendes Kondensieren der gebildeten Arylsulfonsäuren mit Formaldehyd erhältlich.

Vorzugsweise erfolgt die Herstellung des Dispergiermittels (B1) in Gegenwart von aromatischen oder langkettigen aliphatischen Carbonsäuren, deren Salzen, deren Anhydriden oder Mischungen dieser Verbindungen.

Als Ausgangsprodukt für die Herstellung der Arylsulfonsäuren kommt insbesondere ein Gemisch solcher

aromatischer Verbindungen in Betracht, die durch thermische Spaltung eines naphthenischen Rückstandsöls und Fraktionieren der Spaltprodukte erhältlich sind. Die naphthenischen Rückstandsöle fallen beispielsweise beim Cracken von Leichtbenzin an und werden auch als hochsiedende aromatische Kohlenwasserstofföle bezeichnet. Das naphthenische Rückstandsöl wird vorzugsweise bei einer Temperatur von 1400 bis 1700°C thermisch gespalten. Die Spaltprodukte werden dann einer fraktionierenden Destillation zugeführt. Die bei Normaldruck (1013 mbar) von 100 bis 120°C übergehende Fraktion wird gesammelt und als aromatische Verbindung der Sulfonierung zugeführt. Eine solche Fraktion wird bei dem bekannten Acetylen-Öl-Quench-Prozeß üblicherweise als Nebenprodukt erhalten (Ullmann's Encyclopedia of Industrial Chemistry, VCH Verlagsgesellschaft mbH, Weinheim, 1985, Volume A1, Seiten 107 bis 112).

Diese Aromatenfraktion besteht aus einer Mischung vieler aromatischer Substanzen, deren Struktur und Menge praktisch nicht im einzelnen ermittelt werden kann. Folgende Arylverbindungen sind die hauptsächlichsten Vertreter dieser Aromatenfraktion:

| | Gew.-% in der Aromatenfraktion |
|---|---|
| Naphthalin | 30 - 55 |
| 2-Methylnaphthalin | 5 - 15 |
| 1-Methylnaphthalin | 4 - 10 |
| Inden | 3 - 10 |
| Diphenyl | 1 - 5 |
| Methylinden | 1 - 5 |
| Acenaphthen | 1 - 4 |

Die Aromatenfraktion enthält außerdem an identifizierten Bestandteilen in Mengen von 0,1 bis etwa 2 Gew. % folgende Arylverbindungen: Fluoren, Indan, Methylstyrol, Phenanthren, Methylindan, Dimethylnaphthalin, Ethylnaphthalin, Xylole, Tetralin, Styrol, Methylethylbenzol, Anthracen, Fluoranthren, Pyren, Acetnaphthylen und Toluol.

Besonders geeignete Arylsulfonsäuren enthalten in der Regel $\alpha$-und $\beta$-Naphthalinsulfonsäuren, wobei das Verhältnis der $\alpha$- zu den $\beta$-Isomeren üblicherweise 20:1 bis 1:8, insbesondere 10:1 bis 1:5 beträgt.

Als zugesetzte Carbonsäure eignen sich aromatische Carbonsäuren oder deren Derivate, wie Naphthalincarbonsäure, Naphthalsäure, Terephthalsäure, Isophthalsäure, Benzoesäure, Trimellitsäure, Phenylessigsäure, Phenoxyessigsäure, Salicylsäure, p-Hydroxybenzoesäure, Diphenylessigsäure, m-Hydroxybenzoesäure, Benzoltetracarbonsäure oder Säureanhydride wie Phthalsäureanhydrid, Trimellitsäureanhydrid, Benzol-1,2,4,5-tetracarbonsäuredianhydrid oder Naphthalsäureanhydrid.

Geeignete langkettige aliphatische Carbonsäuren sind insbesondere gesättigte oder olefinisch ungesättigte, lineare oder verzweigte aliphatische Monocarbonsäuren mit 8 bis 22, vorzugsweise 8 bis 18 Kohlenstoffatomen, natürlichen oder synthetischen Ursprungs, beispielsweise höhere Fettsäuren wie Caprylsäure, Caprinsäure, Laurinsäure, Myristinsäure, Palmitinsäure, Stearinsäure, Ölsäure, Linolsäure oder Linolensäure oder synthetisch hergestellte Carbonsäuren wie 2-Ethylhexansäure, Isononansäure oder Isotridecansäure.

Weiterhin sind auch Mischungen von Anhydriden, Mischungen von Carbonsäuren, Mischungen von Salzen der in Betracht kommenden Carbonsäuren sowie Mischungen von Carbonsäuren und Anhydriden von Interesse. Als Salze der genannten Carbonsäuren kommen die Alkali-, Ammonium- oder Erdalkalisalze in Betracht, die beispielsweise durch Neutralisation dieser Carbonsäuren mit Natronlauge, Kalilauge, Lithiumhydroxid, Soda, Magnesiumcarbonat, Calciumoxid, Calciumhydroxid, Ammoniak oder Alkanolaminen wie Ethanolamin, Diethanolamin oder Triethanolamin erhältlich sind.

Besonders bevorzugt sind Natriumbenzoat, Natriumphenylacetat, Natriumsalicylat, Natrium-4-hydroxybenzoat, Natriumterephthalat, Natrium-2-hydroxy-3-naphthalincarboxylat, Naphthalin-1-carbonsäure, Phthalsäureanhydrid oder Benzoesäure.

Für die erfindungsgemäßen Pigmentzubereitungen besonders bevorzugte Dispergiermittel (B1) enthalten

50 bis 97 Gew.-%, insbesondere 70 bis 95 Gew.-%, Arylsulfonsäure-Formaldehyd-Kondensationsprodukte und

3 bis 50 Gew.-%, insbesondere 5 bis 30 Gew.-%, aromatische oder langkettige aliphatische Carbonsäuren, deren Salze oder deren Anhydride oder Mischungen davon.

Die Dispergiermittel (B1) sind bekannt und z.B. in der US-A-5 186 846 beschrieben.

Als Dispergiermittel (B2) sind oxalkylierte Phenole der Formel I bzw. II

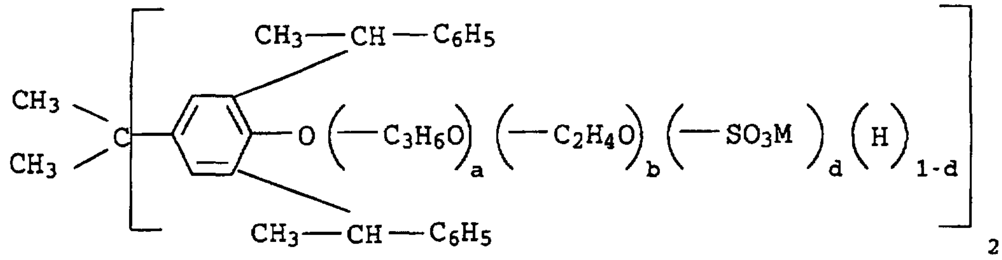

(I)

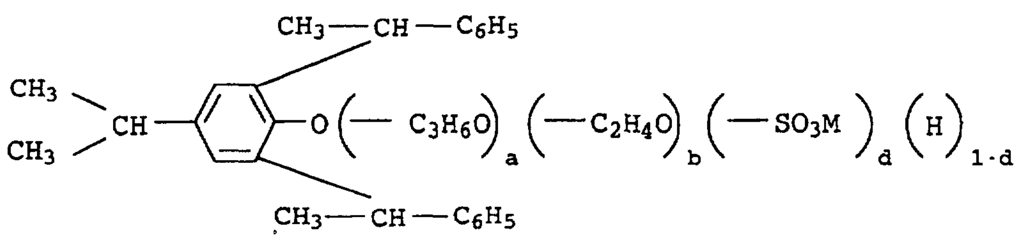

(II)

in denen

M Alkalimetall, beispielsweise Na oder K,

a 0 bis im Mittel 125,

b im Mittel 37 bis 250, wobei im Falle b>37 das Verhältnis b:a mindestens 1:1 ist, und

d 0 oder 1 bedeuten,

oder deren Gemische bevorzugt.

Die Produkte der Formel I und II können durch Umsetzen der Phenolderivate der Formel III oder IV

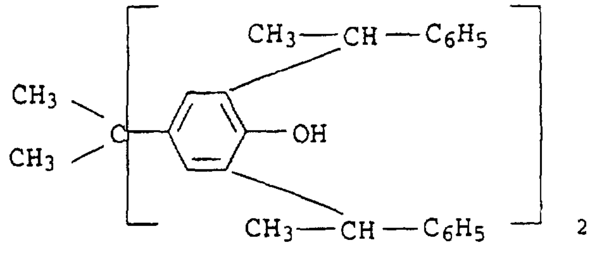

(III)

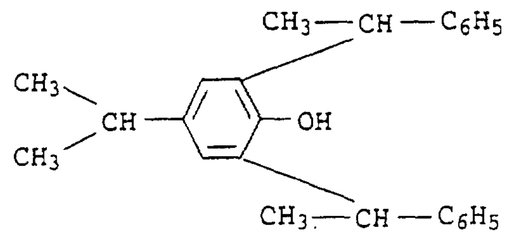

(IV)

mit Propylenoxid und folgender Umsetzung des Adduktes mit Ethylenoxid oder durch Umsetzen von III und/oder IV mit Ethylenoxid erhalten werden. Gegebenenfalls werden die Addukte mit Chlorsulfonsäure oder Schwefeltrioxid vollständig oder partiell zu Schwefelsäurehalbester umgesetzt und die erhaltenen Halbester mit alkalisch wirkenden Mitteln neutral gestellt.

Die Phenole der Formel III und IV können durch Umsetzen von Phenol oder 2,2-(p,p'-Bishydroxydiphenyl) propan mit 3 oder 4 mol Styrol in Gegenwart von Säure als Katalysator erhalten werden. Die Phenole III und IV werden nach bekannten Verfahren zuerst mit Ethylenoxid oder nur mit Ethylenoxid in Gegenwart von sauer oder alkalisch wirkenden Katalysatoren zu den entsprechenden Oxalkylierungsprodukten I und II mit d=O umgesetzt. Die Oxalkylierung kann z.B. nach dem in der US-A-2 979 528 beschriebenen Verfahren erfolgen. Für den Fall b > 37 muß der Quotient

$$\frac{b}{a} > 1 \text{ sein.}$$

Die Schwefelsäurehalbester werden durch Reaktion der Oxalkylierungsprodukte mit Chlorsulfonsäure oder Schwefeltrioxid hergestellt, wobei die Menge so gewählt werden kann, daß alle freien Hydroxygruppen oder nur ein Teil sulfatiert wird. Im letzteren Falle entstehen Gemische aus Verbindungen der Formel I und II, die freie und sulfatierte Hydroxygruppen enthalten. Zur Verwendung als Dispergiermittel werden die bei der Umsetzung erhaltenen Halbester der Schwefelsäure in wasserlösliche Salze überführt. Als solche kommen vorteilhaft die Alkalimetallsalze, z.B. die Natrium- oder Kaliumsalze, in Betracht. Dabei sind im Falle von Chlorsulfonsäure zwei Äquivalente, bei Schwefeltrioxid ein Äquivalent basisch wirkender Verbindungen erforderlich. Als letztere verwendet man zweckmäßigerweise wäßriges Alkalimetallhydroxid. Bei der Neutralisation sollte die Temperatur 70°C nicht überschreiten. Die erhaltenen Salze können in Form von wäßrigen Lösungen oder auch als solche isoliert und in fester Form verwendet werden.

Bevorzugt sind Dispergiermittel (B2), bei denen a 0 bis im Mittel 2,5, b im Mittel 37 bis 250 und d 0 bis im Mittel 0,5 ist. Besonders bevorzugt sind Dispergiermittel (B2), bei denen a 0 bis im Mittel 2,5, b im Mittel 50 bis 100 und d im Mittel 0,5 ist.

Die Dispergiermittel (B2) sind bekannt und z.B. in der US-A-4 218 218 beschrieben.

Die erfindungsgemäßen Pigmentzubereitungen enthalten in der Regel 0,1 bis 20 Gew.-%, vorzugsweise 0,5 bis 10 Gew.-%, Dispergiermittel (B).

Als Komponente (C) enthalten die erfindungsgemäßen Pigmentzubereitungen ein strahlungshärtbares Bindemittel. Dabei handelt es erfindungsgemäß um Bindemittel, die durch Strahlung hoher Energie, d.h. elektromagnetischer Strahlung insbesondere von 220 bis 450 nm (UV-Strahlung) oder Elektronenstrahlen, zu härten sind. Geeignet sind sowohl radikalisch als auch kationisch polymerisierbare Bindemittelkomponenten sowie auch deren Mischungen.

Derartige Bindemittelsysteme sind allgemein bekannt und z.B. in Chemistry & Technology of UV & EB Formulation for Coatings, Inks & Paints, SITA Technology, London (1991), in The Printing Ink Manual, Fourth Edition, Van Nostrand Reinhold (International), London (1989), UV & EB Curing Formulation for Printing Inks and Paints, SITA Technology, London (1984) und in der Firmenschrift Vinyl Ethers, The Innovative Challenge, BASF Aktiengesellschaft (1997) beschrieben.

Als Beispiele für geeignete Bindemittelkomponenten (c) seien acrylatgruppenhaltige, vinylgruppenhaltige und/oder epoxygruppenhaltige Monomere, Prepolymere und Polymere und deren Mischungen genannt.

Bei den acrylatgruppenhaltigen Bindemittelkomponenten (C) handelt es sich insbesondere um Prepolymere auf Acrylat- oder Methacrylatbasis, wobei die Acrylatverbindungen besonders geeignet sind.

Bevorzugte (Meth)Acrylat-Verbindungen enthalten in der Regel 2 bis 20, insbesondere 2 bis 10 und vor allem 2 bis 6 copolymerisierbare, ethylenisch ungesättigte Doppelbindungen.

Das mittlere Molekulargewicht (Zahlenmittel) der (Meth)Acrylatverbindungen beträgt bevorzugt ≤ 15000, besonders bevorzugt unter ≤ 5000, ganz besonders bevorzugt 180 bis 3000 g/mol (bestimmt durch Gelpermeationschromatographie mit Polystyrol als Standard und Tetrahydrofuran als Elutionsmittel).

Als (Meth)Acrylatverbindungen seien z.B. (Meth)Acrylsäureester und insbesondere Acrylsäureester von mehrwertigen Alkoholen, insbesondere solchen, die neben den Hydroxylgruppen keine weiteren funktionellen Gruppen oder allenfalls Ethergruppen enthalten. Beispiele solcher Alkohole sind zweiwertige Alkohole, wie Ethylenglykol, Propylenglykol und deren höher kondensierte Vertreter, z.B. Diethylenglykol, Triethylenglykol, Dipropylenglykol und Tripropylenglykol, Butandiol, Pentandiol, Hexandiol, Neopentylglykol, alkoxylierte phenolische Verbindungen, wie ethoxylierte und propoxylierte Bisphenole, Cyclohexandimethanol, dreiund höherwertige Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierten Alkohole.

Die Alkoxylierungsprodukte sind in bekannter Weise durch Umsetzung der vorstehenden Alkohole mit Alkylenoxiden, insbesondere Ethylen- oder Propylenoxid, erhältlich. Der Alkoxylierungsgrad kann je Hydroxylgruppe bis zu 10 betragen, d.h., 1 mol Hydroxylgruppe kann mit bis zu 10 mol Alkylenoxid alkoxyliert sein.

Als (Meth)Acrylatverbindungen seien weiterhin Polyester(meth)-acrylate genannt, wobei es sich um die (Meth)Acrylsäureester von Polyesterolen handelt, die gesättigt oder ungesättigt sein können.

Als Polyesterole kommen z.B. solche in Betracht, wie sie durch Veresterung von Polycarbonsäuren, vorzugsweise Dicarbonsäuren, mit Polyolen, vorzugsweise Diolen, hergestellt werden können. Die Ausgangsstoffe für solche hydroxylgruppenhaltigen Polyester sind dem Fachmann bekannt. Bevorzugt können als Dicarbonsäuren Bernsteinsäure, Glutarsäure, Adipinsäure, Sebacinsäure, Maleinsäure, Fumarsäure, o-Phthalsäure, deren Isomere und Hydrierungsprodukte sowie veresterbare Derivate, wie Anhydride oder Dialkylester der genannten Säuren, eingesetzt werden. Als Polyole kommen die oben genannten Alkohole, vorzugsweise Ethylenglykol, Propylenglykol-1,2 und -1,3, Butandiol-1,4, Hexandiol-1,6, Neopentylglykol, Cyclohexandimethanol sowie Polyalkylenglykole auf Basis von Ethylenglykol und Propylenglykol in Betracht.

Polyester(meth)acrylate können in mehreren Stufen oder auch einstufig, wie in der EP-A-279 303 beschrieben, aus (Meth)Acrylsäure, Polycarbonsäure und Polyol hergestellt werden.

Weiterhin kann es sich bei den Acrylatverbindungen um Epoxidoder Urethan(meth)acrylate handeln,

Epoxid(meth)acrylate sind z.B. solche, wie sie durch dem Fachmann bekannte Umsetzung von epoxidierten Olefinen oder Mono-, Di- oder Polyglycidylethern, wie Bisphenol-A-diglycidylether, mit (Meth)Acrylsäure erhältlich sind.

Bei Urethan(meth)acrylaten handelt es sich insbesondere um Umsetzungsprodukte von Hydroxyalkyl(meth) acrylaten mit Poly- bzw. Diisocyanaten.

Außerdem seien Melaminacrylate und Siliconacrylate genannt.

Die Acrylatverbindungen können auch nichtionisch modifiziert (z.B. mit Aminogruppen versehen) oder ionisch modifiziert (z.B. mit Säuregruppen oder Ammoniumgruppen versehen) sein und in Form wäßriger Dispersionen oder Emulsionen eingesetzt werden (z.B. EP-A-704 469, EP-A-12 339).

Weiterhin können die in Substanz vorliegenden Acrylatpolymere zur Einstellung der gewünschten Viskosität mit sog. Reaktivverdünnern gemischt werden.

Als Reaktivverdünner eignen sich beispielsweise vinylgruppenhaltige Monomere, insbesondere N-Vinylverbindungen wie N-Vinylpyrrolidon, N-Vinylcaprolactam und N-Vinylformamid und Vinylether, wie Ethyl-, Propyl-, Isopropyl-, Butyl-, Isobutyl-, tert.-Butyl-, Amyl-, 2-Ethylhexyl-, Dodecyl-, Octadecyl- und Cyclohexylvinylether, Ethylenglykolmono- und -divinylether, Di-, Triund Tetraethylenglykolmono- und -divinylether, Polyethylenglykoldivinylether, Ethylenglykolbutylvinylether, Triethylenglykolmethylvinylether, Polyethylenglykolmethylvinylether, Butandiolmono- und -divinylether, Hexandiolmono- und -divinylether, Cyclohexandimethanolmono- und -divinylether, Trimethylolpropantrivinylether, Aminopropylvinylether, Diethylaminoethylvinylether und Polytetrahydrofurandivinylether, Vinylester, wie Vinylacetat, -propionat, -stearat und -laurat, und Vinylaromaten, wie Vinyltoluol, Styrol, 2- und 4-Butylstyrol und 4-Decylstyrol, sowie acrylathaltige Monomere, wie Phenoxyethylacrylat, tert.-Butylcyclohexylacrylat, Hexandioldiacrylat, Tripropylenglykoldiacrylat und Trimethylolpropantriacrylat.

Vinylgruppenhaltige Verbindungen können auch direkt als kationisch polymerisierbare Bindemittelkomponente (C) eingesetzt werden.

Weiterhin geeignete Bindemittelkomponenten (C) sind epoxygruppenhaltige Verbindungen, wie Cyclopentenoxid, Cyclohexenoxid, epoxidiertes Polybutadien, epoxidiertes Sojabohnenöl, (3',4'-Epoxycyclohexylmethyl)-3,4-epoxycyclohexancarboxylat und Glycidylether, z.B. Butandioldiglycidylether, Hexandioldiglycidylether, Bisphenol-A-Diglycidylether und Pentaerytrithbiglycidylether, wobei ebenfalls kationisch polymerisierbare Monomere, z.B. ungesättigte Aldehyde und Ketone, Diene wie Butadien, Vinylaromaten wie Styrol, N-substituierte Vinylamine wie Vinylcarbazol und cyclische Ether wie Tetrahydrofuran, mitverwendet werden können.

Die erfindungsgemäßen Pigmentzubereitungen enthalten in der Regel 0,1 bis 20 Gew.-%, vorzugsweise 1 bis 15 Gew.-%, Bindemittelkomponente (C).

Weiterhin enthalten die erfindungsgemäßen Pigmentzubereitungen, insbesondere wenn die Bindemittelhärtung mittels UV-Strahlung erfolgen soll, einen Photoinitiator (D), welcher die Polymerisation in Gang setzt.

Geeignete Photoinitiatoren für radikalische Photopolymerisationen, also die Polymerisation von Acrylaten und gewünschtenfalls Vinylverbindungen, sind z.B. Benzophenon und Benzophenonderivate wie 4-Phenylbenzophenon und 4-Chlorbenzophenon, Acetophenonderivate wie 1-Benzoylcyclohexan-1-ol, 2-Hydroxy-2,2-dimethylacetophenon und 2,2-Dimethoxy-2-phenylacetophenon, Benzoin und Benzoinether wie Methyl-, Ethyl- und Butylbenzoinether, Benzilketale wie Benzildimethylketal, 2-Methyl-1-[4-(methylthio)phenyl]-2-morpholinopropan-1-on, Acylphosphinoxide wie 2,4,6-Trimethylbenzoyldiphenylphosphinoxid und Bisacylphosphinoxide.

Geeignete Photoinitiatoren für kationische Photopolymerisationen, also die Polymerisation von Vinylverbindungen oder epoxygruppenhaltigen Verbindungen, sind z.B. Aryldiazoniumsalze wie 4-Methoxybenzoldiazoniumhexafluorophosphat, Benzoldiazoniumtetrafluoroborat und Toluoldiazoniumtetrafluoroarsenat, Aryliodoniumsalze wie Diphenyliodoniumhexafluoroarsenat, Arylsulfoniumsalze wie Triphenylsulfoniumhexafluorophosphat, Benzol- und Toluolsulfoniumhexafluorophosphat und Bis-[4-diphenylsulfonio-phenyl]sulfidbis-hexafluorophosphat, Disulfone wie Diphenyldisulfon und Phenyl-4-tolyldisulfon, Diazodisulfone, Imido-triflate, Benzointosylate, Isochinoliniumsalze wie N-Ethoxyisochinoliniumhexafluorophosphat, Phenylpyridiniumsalze wie N-Ethoxy-4-phenylpyridiniumhexafluorophosphat, Picoliniumsalze wie N-Ethoxy-2-picoliniumhexafluorophosphat, Ferroceniumsalze und Titanocene.

Wenn ein Photoinitiator (D) in den erfindungsgemäßen Pigmentpräparationen enthalten ist, was bei der Bindemittelhärtung durch UV-Strahlen in der Regel erforderlich ist, so beträgt sein Gehalt in der Regel 0,1 bis 10 Gew.-%, vorzugsweise 0,1 bis 8 Gew.-%.

Wasser stellt den Hauptbestandteil (E) der erfindungsgemäßen Pigmentzubereitungen dar. Sein Gehalt beträgt in der Regel 35 bis 90 Gew.-%, bevorzugt 45 bis 80 Gew.-%.

Vorzugsweise enthalten die erfindungsgemäßen Pigmentzubereitungen als zusätzliche Komponente (F) ein Mittel mit wasserrückhaltender Wirkung, welches sie für das Ink-Jet-Verfahren besonders geeignet macht.

Als Komponente (F) eignen sich mehrwertige Alkohole, bevorzugt unverzweigte und verzweigte $C_3$-$C_8$-Alkanole wie Glycerin, Erythrit, Pentaerythrit, Pentite wie Arabit, Adonit und Xylit, Hexite wie Sorbit, Mannit und Dulcit, wobei die $C_3$-$C_6$-Alkanole, darunter vor allem Sorbit, besonders bevorzugt sind.

Weiterhin eignen sich als Komponente (F) Polyalkylenglykole, worunter auch die niederen (Di-, Tri- und Tetra-) Alkylenglykole verstanden werden sollen. Bevorzugt sind Polyalkylenglykole mit mittleren Molekulargewichten von 100 bis 1500, wobei Polyethylenglykole mit einem mittleren Molekulargewicht von $\leq$ 800 besonders bevorzugt sind.

Bevorzugte erfindungsgemäße Pigmentzubereitungen enthalten als Kompanente (F) eine Kombination von mehrwertigem Alkohol und Polyalkylenglykol (in der Regel 0,1 bis 35 Gew.-%, insbesondere 5 bis 25 Gew.-%, bezogen auf das Gewicht der Zubereitung).

Weiterhin eignen sich zur Aufrechterhaltung der Fluidität der erfindungsgemäßen Pigmentzubereitungen schwer verdampfbare, wasserlösliche Lösungsmittel wie N-Methylpyrrolidon, 2-Pyrrolidon und Ethoxylierungsprodukte von Glycerin und Pentaerythrit, die in Mengen von 0 bis 15 Gew.-% zugesetzt werden können.

Selbstverständlich können die erfindungsgemäßen Pigmentzubereitungen weitere Hilfsmittel, wie sie insbesondere für (wäßrige) Ink-Jet-Tinten und in der Druck- und Lackindustrie üblich sind, enthalten. Genannt seien z.B. Konservierungsmittel (wie Glutardialdehyd und/oder Tetramethylolacetylenharnstoff), Antioxidantien, Entgaser/Entschäumer, Mittel zur Regulierung der Viskosität, Verlaufshilfsmittel, Benetzer, Antiabsetzmittel, Glanzverbesserer, Gleitmittel, Haftverbesserer, Hautverhinderungsmittel, Mattierungsmittel, Emulgatoren, Stabilisatoren, Hydrophobiermittel, Lichtschutzadditive, Griffverbesserer und Antistatikmittel. Wenn diese Mittel Bestandteil der erfindungsgemäßen Pigmentzubereitungen sind, beträgt ihre Gesamtmenge in der Regel $\leq$ 1 Gew.-%, bezogen auf das Gewicht der Zubereitung.

Die erfindungsgemäßen Pigmentzubereitungen weisen üblicherweise eine Viskosität von 1 bis 20 $mm^2$/sec, vorzugsweise 2 bis 15 $mm^2$/sec auf.

Die Oberflächenspannung der erfindungsgemäßen Pigmentzubereitungen beträgt in der Regel 20 bis 70 mN/m.

Der pH-Wert der erfindungsgemäßen Pigmentzubereitungen liegt im allgemeinen bei 5 bis 11, vorzugsweise 6 bis 10.

Bei der Herstellung der erfindungsgemäßen Pigmentzubereitungen geht man zweckmäßigerweise wie folgt vor:

Man mischt das Pigment, beispielsweise in Form eines Preßkuchens, zusammen mit dem Dispergiermittel und gegebenenfalls Polyalkylenglykol in Gegenwart von Wasser und dispergiert in einer geeigneten Apparatur vor. Die resultierende Mischung mahlt man dann in einer Mühle, um die gewünschte Pigmentteilchengröße einzustellen. Schließlich nimmt man die Endeinstellung vor, indem man noch entsprechende Mengen Wasser, gegebenenfalls Polyalkylenglykol und/oder mehrwertigen Alkohol und gegebenenfalls weitere Hilfsmittel zusetzt und nach dem Mischen mittels eines Siebs, vorzugsweise mit einer Porengröße von 1 µm, filtriert. Anschließend gibt man das Bindemittel, vorzugsweise in Form einer wäßrigen Dispersion, und gewünschtenfalls den Photoinitiator zu.

Die erfindungsgemäßen Pigmentzubereitungen eignen sich in vorteilhafter Weise als Tinten im Ink-Jet-Verfahren.

Beim Ink-Jet-Verfahren verwendet man üblicherweise wäßrige Tinten, die in kleinen Tröpfchen direkt auf das Substrat gesprüht werden. Man unterscheidet dabei ein kontinuierliches Verfahren, bei dem die Tinte gleichmäßig durch eine Düse gepreßt und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Pigmentzubereitungen als Tinten für das Bubble-Jet-Verfahren und für das Verfahren mittels eines piezoelektrischen Kristalls.

Die anschließende Härtung des Bindemittels, d.h. die Fixierung des Drucks, kann in üblicher Weise mit Hilfe energiereicher Strahlung erfolgen. Hierzu bestrahlt man den Druck entweder unter Inertgasatmosphäre (z.B. Stickstoff) mit Elektronen (Elektronenstrahlhärtung) oder mit energiereicher elektromagnetischer Strahlung, bevorzugt in Wellenlängenbereich von 220 bis 450 nm. Die gewählten Lichtintensitäten sind dabei an die Härtungsgeschwindigkeit anzupassen, um einen Abbau des Farbmittels zu vermeiden. Bei einer Lampenleistung von 120 bis 240 W/cm kann die Härtungsgeschwindigkeit z.B. je nach Konzentration und Art des Photoinititators bis zu 100 m/min betragen.

Die erfindungsgemäßen Pigmentzubereitungen können auf alle Arten von Substratmaterialien gedruckt werden. Als Substratmaterialien seien z.B.

- cellulosehaltige Materialien wie Papier, Pappe, Karton, Holz und Holzwerkstoffe, die auch lackiert oder anderweitig beschichtet sein können,
- metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materialien wie Glas, Porzellan und Keramik, die ebenfalls beschichtet sein können,
- polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
- textile Materialien wie Fasern, Garne, Zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe,
- Leder, sowohl Naturleder als auch Kunstleder, als Glatt-, Nappa- oder Velourleder,
- Lebensmittel und Kosmetika

genannt.

Das Substratmaterial kann dabei flächig oder dreidimensional gestaltet sein und sowohl vollflächig als auch bildmäßig beschichtet oder bedruckt werden.

Die erfindungsgemäßen Pigmentzubereitungen zeichnen sich als Ink-Jet-Tinten mit insgesamt vorteilhaften Anwendungseigenschaften, vor allem gutem Laufverhalten aus, und ergeben Drucke hoher Licht- und Wasserechtheit.

Beispiele

I) Herstellung erfindungsgemäßer Pigmentzubereitungen

15 g Pigment, 15 g Polyethylenglykol (mittl. Molekulargewicht: 400), 7,5 g eines Dispergiermittels auf Basis eines Arylsulfonsäure-Formaldehyd-Kondensationsproduktes, das zusätzlich noch Benzoesäure enthält und in der US-A-5 186 846 als Dispergiermittel 3 beschrieben ist, 0,37 g 50 gew.-%ige wäßrige Lösung von Glutardialdehyd und 0,75 g 47 gew.-%ige wäßrige Lösung von Tetramethylolacetylenharnstoff wurden mit Wasser zum Gesamtgewicht von 100 g aufgefüllt und in einer Mühle angeteigt. Dann wurde der pH-Wert mit 10 gew.-%iger Natronlauge auf 8,5 gestellt.

Anschließend wurde die Mischung so lange in einer Rührwerkskugelmühle gemahlen, bis 99 % der Pigmentteilchen eine Größe von kleiner 1 µm aufwiesen.

Zur Endeinstellung wurden 26,7 g Mahlgut mit weiteren 4 g des Polyethylenglykols, 0,1 g 50 gew.-%iger wäßriger Lösung von Glutardialdehyd, 0,3 g 47 gew.-%iger wäßriger Lösung von Tetramethylolacetylendiharnstoff und 20 g 70 gew.-%iger wäßriger Sorbitlösung versetzt, mit Wasser bis zu einem Gesamtgewicht von 100 g aufgefüllt, gemischt und über ein Sieb mit einer Porengröße von 1 µm filtriert.

Dann wurden 12,8 g einer 40 gew.-%igen wäßrigen Polyurethandispersion (UV-härtbar), erhalten analog Beispiel 1 der EP-A-704 469 unter Einsatz eines Polyesters mit einem mittleren Molekulargewicht von ca. 1000 (Zahlenmittel) und 0,64 g 2-Hydroxy-2,2-dimethylacetophenon als Photoinitiator zugegeben.

Weitere Angaben zu den auf diese Weise erhaltenen Pigmentzubereitungen sind in Tabelle 1 zusammengestellt. Bei den Prozentangaben handelt es sich jeweils um Gew.-%.

Tabelle 1

| | Zubereitung Nr. | | | |
|---|---|---|---|---|
| | 1 | 2 | 3 | 4 |
| C.I. Pigment Yellow 138 | 3,4% | | | |
| C.I. Pigment Red 146 | | 3,4% | | |
| C.I. Pigment Blue 15:3 | | | 3,4% | |
| C.I. Pigment Black 7 | | | | 3,4% |
| Dispergiermittel | 1,7% | 1,7% | 1,7% | 1,7% |
| Polyethylenglykol | 6,8% | 6,8% | 6,8% | 6,8% |
| 70 %ige wäßrige Lösung von Sorbit | 17,1% | 17,1% | 17,1% | 17,1% |
| 50 %ige wäßrige Lösung von Glutardialdehyd | 0,4% | 0,4% | 0,4% | 0,4% |
| 4 %ige wäßrige Lösung von Tetramethylolacetylenharnstoff | 0,9% | 0,9% | 0,9% | 0,9% |
| 40 %ige wäßrige Dispersion des UV-härtbaren Bindemittels | 10,4% | 10,4% | 10,4% | 10,4% |
| Photoinitiator | 0,6% | 0,6% | 0,6% | 0,6% |
| vollentsalztes Wasser | 58,7% | 58,7% | 58,7% | 58,7% |
| Gesamt | 100 % | 100 % | 100 % | 100 % |

II) Prüfung der physikalischen und drucktechnischen Eigenschaften der Pigmentzubereitungen

Die Pigmentzubereitungen 1 bis 4 waren unbegrenzt stabil und zeigten keine Koagulation.

Ihre physikalischen und drucktechnischen Eigenschaften sind in Tabelle 2 zusammengestellt und wurden wie folgt geprüft:

1) Oberflächenspannung

Die Oberflächenspannung wurde mit dem Digital-Tensiometer K 10 der Fa. Krüss bestimmt. Die in Tabelle 2 angegebenen Werte sind die Mittelwerte aus 3 Messungen.

2) Viskosität

Die kinetische Viskosität wurde nach der Ubbelohde Methode (DIN 51662) bestimmt.

3) pH-Wert

Der pH-Wert wurde mit pH-Meter 763 der Fa. Knick bestimmt.

4) Kogationstest

Von besonderer Wichtigkeit ist das Verhalten der Tinten während des Druckvorgangs in den Düsen. Die Neigung der Tinten, Ablagerungen und Verstopfungen in den Düsen zu bilden, wurde wie folgt überprüft:

Als Testgerät wurde ein Stylus Color 500 Bubble Jet-Drukker der Fa. Epson verwendet.

Zunächst wurde das mittlere Tropfengewicht in Abhängigkeit der an die Düsen angelegten Spannung ermittelt. Anschließend wurden bei konstanter Spannung 1 Million Impulse an jede Düse gegeben und danach

erneut das mittlere Tropfengewicht einer definierten Tropfenanzahl bestimmt. Dieser Vorgang wurde insgesamt 10 mal wiederholt.

Bei idealem Verhalten der Tinten sollte das mittlere Tropfengewicht über den Versuchszeitraum konstant bleiben.

Die Veränderung des Tropfengewichtes der einzelnen Tinten ist in Tabelle 2 angeführt.

Tabelle 2

| | Zubereitung Nr. | | | |
|---|---|---|---|---|
| | 1 | 2 | 3 | 4 |
| Oberflächenspannung [mN/m] | 56,7 | 51,6 | 57,1 | 60,0 |
| kinetische Viskosität [$mm^2/s$] | 3,6 | 3,7 | 12,9 | 7,6 |
| pH-Wert | 7,0 | 7,1 | 7,0 | 7,2 |
| Tropfengewicht [ng] | 132 | 116 | 104 | 101 |
| Kogationstest (b: bestanden) | b | b | b | b |

III) Verwendung der Pigmentzubereitungen als Tinten im Ink-Jet-Verfahren

a) Druck auf Papier

Mit den Pigmentzubereitungen 1 bis 4 wurde unter Verwendung eines handelsüblichen Ink-Jet-Druckers der Firma Epson (Stylus Color 500) ein Testbild (jeweils ein 3 cm breiter und 20 cm langer Streifen) auf ein Spezialpapier für Ausdrucke mit einer Auflösung von 720 dpi der Fa. Epson gedruckt.

Der jeweils erhaltene Druck wurde dann einer photochemisch initiierten Polymerisationsreaktion durch Belichtung auf einem UV-Bandbelichter der Firma Fusion (D-Strahler, 120 W/cm, Härtungsgeschwindigkeit 10 m/min) unterworfen.

Nach diesem Härtungsschritt wies der Druck bei unveränderter Farbtiefe und unveränderter Brillanz hervorragende Reib- und Wasserechtheit auf.

b) Druck auf Baumwollgewebe

Analog a) wurde mit den Pigmentzubereitungen 1 bis 4 ein Testbild mit einer Auflösung von 720 dpi auf Baumwollgewebe (Fadenzahl 80/cm) gedruckt und anschließend photochemisch gehärtet.

Nach diesem Härtungsschritt wies der Druck bei unveränderter Farbtiefe und unveränderter Brillanz hervorragende Reib- und Wasserechtheit auf.

c) Druck auf Aluminiumfolie

Analog a) wurde mit den Pigmentzubereitungen 1 bis 4 ein Testbild mit einer Auflösung von 720 dpi auf eine auf ein DIN A4-Papier aufgeklebte Aluminiumfolie gedruckt und anschließend photochemisch gehärtet.

Nach diesem Härtungsschritt wies der Druck bei unveränderter Farbtiefe und unverändert hoher Brillanz hervorragende Reib- und Wasserechtheit auf. Die Haftung des Drukkes auf dem Metall war exzellent.

## Patentansprüche

**1.** Ink-Jet-Tinten, enthaltend

A) mindestens ein feinteiliges organisches oder anorganisches Pigment,

B) ein Dispergiermittel auf der Basis von Arylsulfonsäure-Formaldehyd-Kondensationsprodukten (B1), enthaltend

50 bis 97 Gew.-% Arylsulfonsäure-Formaldehyd-Kondensationsprodukte und

3 bis 50 Gew.-% aromatische oder langkettige aliphatische Carbonsäuren, deren Salze oder deren Anhydride oder Mischungen davon,

oder von oxalkylierten Phenolen (B2) der Formel I oder II

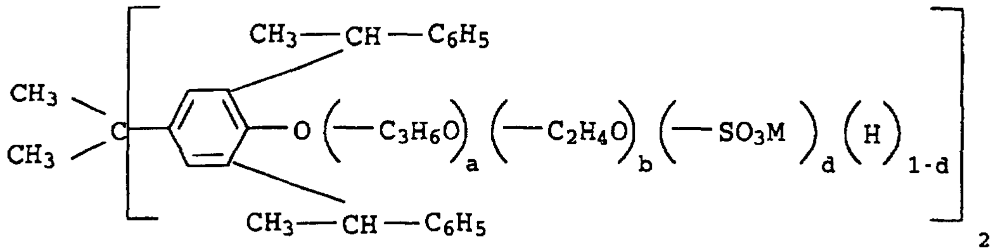

(I)

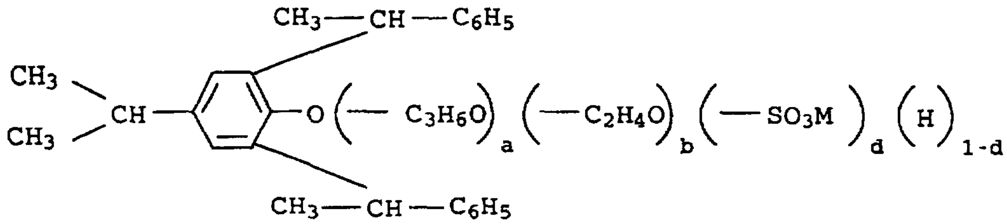

(II)

in denen

M Alkalimetall,

a 0 bis im Mittel 125,

b im Mittel 37 bis 250, wobei im Falle b>37 das Verhältnis b:a mindestens 1:1 ist, und

d 0 oder 1 bedeuten,

oder deren Gemischen,

C) ein strahlungshärtbares Bindemittel,

D) gewünschtenfalls einen Photoinitiator und

E) Wasser

als wesentliche Bestandteile.

**2.** Ink-Jet-Tinten nach Anspruch 1, **dadurch gekennzeichnet, dass** M Na oder K bedeutet.

**3.** Ink-Jet-Tinten nach Anspruch 1 oder 2, die, jeweils bezogen auf das Gewicht der Tinte,

0,1 bis 20 Gew.-% der Komponente (A),
0,1 bis 20 Gew.-% der Komponente (B),
0,1 bis 20 Gew.-% der Komponente (C),
0 bis 10 Gew.-% der Komponente (D) und
mindestens 35 Gew.-% der Komponente (E)

enthalten.

**4.** Ink-Jet-Tinten nach Anspruch 1 bis 3, die zusätzlich einen mehrwertigen Alkohol und/oder ein Polyalkylenglykol mit einem höheren Siedepunkt als Wasser als Komponente (F) enthalten.

**5.** Ink-Jet-Tinten nach Anspruch 4, die, bezogen auf das Gewicht der Tinte, 0,1 bis 35 Gew.-% der Komponente (F) enthalten.

**6.** Ink-Jet-Tinten nach den Ansprüchen 1 bis 5, bei denen 95 % der enthaltenen Pigmentteilchen (A) ≤ 1 µm sind.

**7.** Ink-Jet-Tinten nach den Ansprüchen 1 bis 6, die ein radikalisch polymerisierbares Bindemittel, ein kationisch polymerisierbares Bindemittel oder Mischungen davon als Komponente (C) enthalten.

**8.** Ink-Jet-Tinten nach den Ansprüchen 1 bis 7, die als Komponente (C) acrylatgruppenhaltige, vinylgruppenhaltige und/oder epoxygruppenhaltige Monomere, Prepolymere oder Polymere oder deren Mischungen enthalten.

**9.** Verfahren zum Bedrucken von flächigen oder dreidimensional gestalteten Substraten im Ink-Jet-Verfahren, **dadurch gekennzeichnet, daß** man Ink-Jet-Tinten gemäß den Ansprüchen 1 bis 8 verdruckt und den erhaltenen Druck anschließend durch Bestrahlung mit Elektronen oder energiereicher elektromagnetischer Strahlung härtet.

**Claims**

**1.** Ink-jet inks comprising

A) at least one finely divided, organic or inorganic pigment,

B) a dispersant based on arylsulfonic acid/formaldehyde condensation products (B1) comprising,

from 50 to 97% by weight of arylsulfonic acid/formaldehyde condensation products and

from 3 to 50% by weight of aromatic or long-chain aliphatic carboxylic acids, their salts or their anhydrides or mixtures thereof,

or on alkoxylated phenols (B2) of the formula I or II

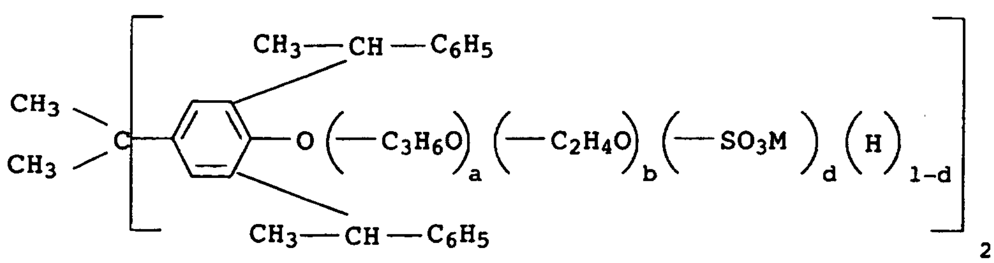

(I)

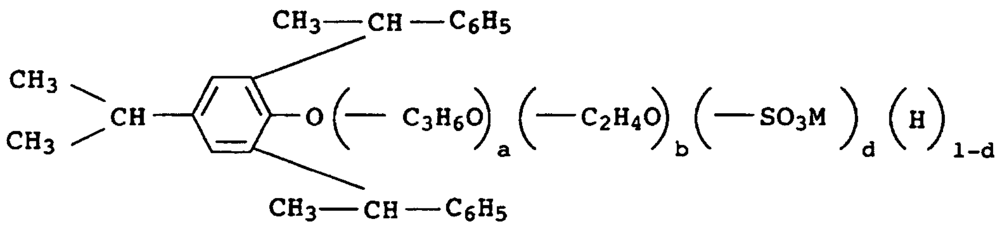

(II)

where

M is an alkali metal,

a is from 0 to on average 125,

b is on average from 37 to 250, the ratio b:a being at least 1:1 when b>37, and

d is 0 or 1,

or mixtures thereof,

C) a radiation-curable binder,

D) if desired, a photoinitiator, and

E) water

as essential constituents.

**2.** Ink-jet inks as claimed in claim 1, wherein M is Na or K.

**3.** Ink-jet inks as claimed in claim 1 or 2, comprising, based on the weight of the ink,

from 0.1 to 20% by weight of component (A),

from 0.1 to 20% by weight of component (B),

from 0.1 to 20% by weight of component (C),

from 0 to 10% by weight of component (D), and

at least 35% by weight of component (E).

**4.** Ink-jet inks as claimed in any of claims 1 to 3, further comprising a polyhydric alcohol and/or a polyalkylene glycol having a higher boiling point than water as component (F).

**5.** Ink-jet inks as claimed in claim 4, comprising, based on the weight of the ink, from 0.1 to 35% by weight of component (F).

**6.** Ink-jet inks as claimed in any of claims 1 to 5, wherein 95% of the pigment particles (A) present are $\leq 1$ µm.

**7.** Ink-jet inks as claimed in any of claims 1 to 6, comprising a free-radically polymerizable binder, a cationically polymerizable binder or mixtures thereof as component (C).

8. Ink-jet inks as claimed in any of claims 1 to 7, comprising acrylate, vinyl and/or epoxy monomers, prepolymers or polymers or mixtures thereof as component (C).

9. A process for printing sheetlike or three-dimensionally configured substrates by the ink-jet process, which comprises printing ink-jet inks as claimed in any of claims 1 to 8 and then curing the resulting print by irradiation with electrons or high energy electromagnetic radiation.

**Revendications**

1. Encres pour dispositifs à jet d'encre, contenant

A) au moins un pigment organique ou minéral en fines particules,
B) un agent dispersant à base de produits de condensation acide arylsulfonique-formaldéhyde (B1), contenant

50 à 97 % en poids de produits de condensation acide arylsulfonique-formaldéhyde et
3 à 50 % en poids d'acides carboxyliques aromatiques ou aliphatiques à longue chaîne, leurs sels, leurs anhydrides, ou les mélanges de ces composés,

ou de phénols oxyalkylés (B2) de formule I ou II

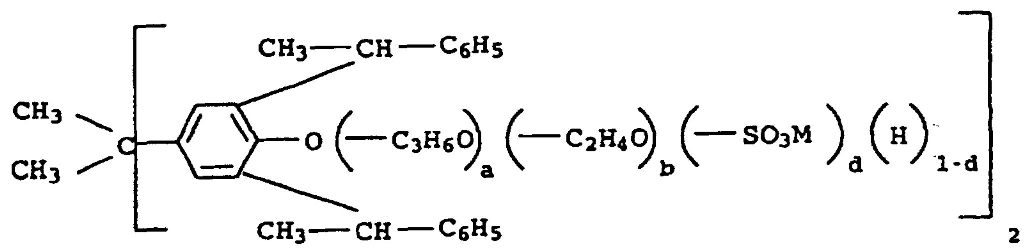

(I)

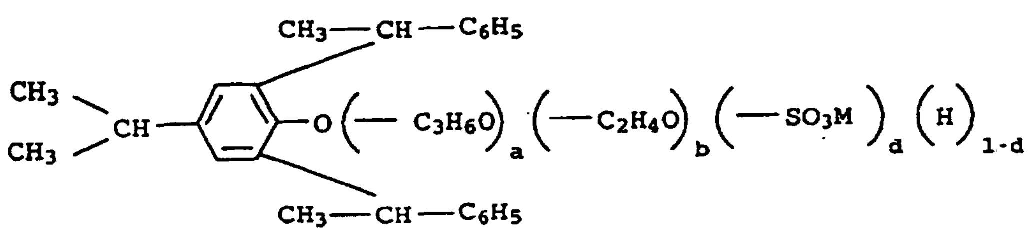

(II)

dans lesquelles
M représente un métal alcalin,
a est un nombre allant de 0 à 125 en moyenne,
b est un nombre allant de 37 à 250 en moyenne, le rapport b/a étant égal au moins à 1 : 1 lorsque b est supérieur à 37, et
d est égal à 0 ou 1,
ou leurs mélanges,
C) un liant durcissable sous l'action de rayonnements,
D) le cas échéant un photo-inducteur et
E) de l'eau,

en tant que constituants essentiels.

**2.** Encres pour dispositifs à jet d'encre selon la revendication 1, **caractérisées par le fait que** M représente Na ou K.

**3.** Encres pour dispositifs à jet d'encre selon la revendication 1 ou 2, contenant, sur leur poids total,

0,1 à 20 % en poids du composant A),
0,1 à 20 % en poids du composant B),
0,1 à 20 % en poids du composant C),
0 à 10 % en poids du composant D) et
au moins 35 % en poids du composant E).

**4.** Encres pour dispositifs à jet d'encre selon les revendications 1 à 3, contenant en outre un alcool polyvalent et/ou un polyalkylèneglycol à un point d'ébullition supérieur à celui de l'eau, en tant que composant F).

**5.** Encres pour dispositifs à jet d'encre selon la revendication 4, contenant, sur leur poids total, 0,1 à 35 % en poids du composant F).

**6.** Encres pour dispositifs à jet d'encre selon les revendications 1 à 5, dans lesquelles 95 % des particules pigmentaires contenues A) ont une dimension inférieure ou égale à 1 µm.

**7.** Encres pour dispositifs à jet d'encre selon les revendications 1 à 6, contenant un liant apte à la polymérisation radicalaire, un liant apte à la polymérisation cationique ou'un mélange de tels liants en tant que composant C).

**8.** Encres pour dispositifs à jet d'encre selon les revendications 1 à 7, contenant, pour le composant C), des monomères, prépolymères ou polymères à groupes acrylates, à groupes vinyle et/ou à groupes époxy, ou leurs mélanges.

**9.** Procédé pour imprimer des supports planiformes ou tridimensionnels par le procédé à jet d'encre, **caractérisé par le fait que** l'on imprime les encres pour dispositifs à jet d'encre selon les revendications 1 à 8, puis on durcit l'impression obtenue par exposition à des faisceaux d'électrons ou à des rayonnements électromagnétiques à haute énergie.